# EUROPÄISCHE PATENTSCHRIFT

(11) **EP 1 353 768 B1**
(45) Veröffentlichungstag und Bekanntmachung des Hinweises auf die Patenterteilung: **04.05.2005**
(21) Anmeldenummer: 02704662.2
(22) Anmeldetag: 21.01.2002
(51) Int. Cl.: B23B 1/00, B23P 11/02

(54) **VORRICHTUNG ZUM INDUKTIVEN ERWÄRMEN EINES WERKZEUGHALTERS**
DEVICE FOR THE INDUCTIVE HEATING OF A TOOLHOLDER
DISPOSITIF POUR CHAUFFER PAR INDUCTION UN PORTE-OUTILS

(30) Priorität: 22.01.2001 DE 10102710
(43) Veröffentlichungstag der Anmeldung: 22.10.2003
(73) Patentinhaber: Franz Haimer Maschinenbau KG, 86568 Hollenbach-Igenhausen (DE)
(72) Erfinder: HAIMER, Franz, 86568 Igenhausen (DE)
(74) Vertreter: Liska, Horst, Dr.-Ing.
(86) Internationale Anmeldenummer: PCT/EP2002/000556
(87) Internationale Veröffentlichungsnummer: WO 2002/057037

(56) Entgegenhaltungen:
- DE-A- 19 915 412

## Beschreibung

Die Erfindung betrifft eine Vorrichtung zum induktiven Erwärmen eines eine zentrische Aufnahmeöffnung für einen Schaft eines Rotationswerkzeugs, beispielsweise eines Bohrers oder Fräsers oder Reibwerkzeugs enthaltenden Hülsenabschnitts eines Werkzeughalters, der den in der Aufnahmeöffnung sitzenden Schaft des Werkzeugs im Presssitz hält und bei Erwärmung freigibt, nach dem Oberbegriff des Anspruchs 1.

Eine solche Vorrichtung ist aus DE 199 15 412 A1 bekannt.

Es ist bekannt, insbesondere bei mit hoher Drehzahl rotierenden Werkzeugen, deren Schaft in einen Hülsenabschnitt eines Werkzeughalters einzuschrumpfen. Der Hülsenabschnitt wird hierzu beispielsweise mittels einer ihn umschließenden Induktionsspule erwärmt, so dass der Werkzeugschaft in die damit sich vergrößernde Aufnahmeöffnung des Hülsenabschnitts eingesteckt werden kann. Der Außendurchmesser des Werkzeugschafts ist etwas größer als der Nenndurchmesser der Aufnahmeöffnung, so dass das Werkzeug nach dem Abkühlen des Hülsenabschnitts im Presssitz drehfest in dem Werkzeughalter gehalten ist.

Zum Entnehmen des Werkzeugs muss der Hülsenabschnitt erneut erwärmt werden. Da hierbei die Gefahr besteht, dass sich auch der Werkzeugschaft mit erwärmt, kann es zu Problemen kommen, wenn die Wärmedehnung des Hülsenabschnitts bezogen auf den sich gleichfalls ausdehnenden Werkzeugschaft unzureichend ist.

Aus DE 199 15 412 A1 ist eine induktive Heizvorrichtung zum Erwärmen des Hülsenabschnitts eines Werkzeughalters bekannt. Die Vorrichtung hat eine auf den Hülsenabschnitt des Werkzeughalters aufsetzbare und ihn hierbei mit radialem Abstand ringförmig umschließende Induktionsspule, die aus einem Generator mit elektrischem Wechselstrom. gespeist wird. Das Magnetfeld der Induktionsspule induziert in dem elektrisch leitenden, zumeist auch magnetisierbarem Material des Werkzeughalters Induktionsströme, die den Hülsenabschnitt unmittelbar erwärmen. Die Induktionsspule erstreckt sich axial zumindest über die Eingriffslänge, mit der der Werkzeugschaft in die Aufnahmeöffnung eintaucht und schließt mit ihrer Wicklung etwa im Bereich des werkzeugseitigen Stirnendes des Hülsenabschnitts axial ab. In radialer Richtung verläuft der Innenumfang der Induktionsspule im Abstand zum Hülsenabschnitt, um ein und dieselbe Induktionsspule bei Werkzeughaltern mit unterschiedlichem Außendurchmesser des Hülsenabschnitts nutzen zu können.

An ihren Stirnseiten und ihrem Außenumfang ist die Wicklung der Induktionsspule mit einem Mantel aus magnetisierbarem, d.h. ferromagnetischem oder ferrimagnetischem Material ummantelt, dessen, bezogen auf Luft hohe magnetische Leitfähigkeit den magnetischen Fluss im Wesentlichen auf den Mantel konzentriert. Der dem werkzeugseitigen Ende des Hülsenabschnitts benachbarte Bereich des Mantels ist als im Wesentlichen scheibenförmiges Ringelement ausgebildet, welches mit seinem Innenumfang auf dem werkzeugseitigen Stirnende des Hülsenabschnitts aufliegt und sich radial über die Stirnfläche der Wicklung der Induktionsspule hinweg bis zu deren Außenumfang erstreckt. Das Ringelement bildet einen Polschuh, der den magnetischen Fluss der Induktionsspule auf den Hülsenabschnitt konzentrieren soll.

Es ist Aufgabe der Erfindung, eine Vorrichtung zum induktiven Erwärmen eines das Werkzeug im Schrumpfsitz haltenden Werkzeughalters zu schaffen, die mit einfachen Mitteln ein sicheres Ausspannen des Werkzeugs aus dem Werkzeughalter ermöglicht.

Die Erfindung geht aus von einer Vorrichtung zum induktiven Erwärmen eines eine zentrische Aufnahmeöffnung für einen Schaft eines Rotationswerkzeugs enthaltenden Hülsenabschnitts eines Werkzeughalters, der den in der Aufnahmeöffnung sitzenden Schaft des Werkzeugs im Presssitz hält und bei Erwärmung freigibt. Eine solche Vorrichtung umfasst
- eine den Hülsenabschnitt des Werkzeughalters für die Erwärmung mit radialem Abstand ringförmig umschließende Induktionsspule,
- eine die Induktionsspule mit elektrischem Strom periodisch wechselnder Amplitude speisenden Generator und
- ein den Schaft des Werkzeugs nahe dem werkzeugseitigen Ende des Hülsenabschnitts des Werkzeughalters umschließendes Ringelement aus einem den magnetischen Fluss konzentrierenden, magnetisierbaren Material, wobei das Ringelement im Bereich seines kleinsten Durchmessers dem werkzeugseitigen Ende des Hülsenabschnitts eng benachbart ist, insbesondere auf dem Hülsenabschnitt aufliegt.

Die vorstehend angegebene Aufgabe wird unter einem ersten Aspekt der Erfindung dadurch gelöst, dass die dem Inneren der Induktionsspule axial zugewandte Fläche des Ringelements zumindest in einem Teilbereich radial zwischen dem Außenumfang des werkzeugseitigen Endes des Hülsenabschnitts und dem Innenumfang der Induktionsspule axial vom Ende des Hülsenabschnitts weg schräg nach radial außen verläuft.

Der von der Induktionsspule erzeugte magnetische Fluss muss den Hülsenabschnitt über die gesamte, zum Spannen des Werkzeugschafts ausgenutzte axiale Länge möglichst gleichmäßig erwärmen. Als kritisch hat sich das werkzeugseitige Ende des Hülsenabschnitts herausgestellt, da das benachbarte axiale Ende der Induktionsspule bei herkömmlichen Induktionsspulen nicht oder nur unwesentlich über das axiale Ende des Hülsenabschnitts vorstehen darf, um das Miterwärmen des Werkzeugschafts durch in dem Werkzeugschaft induzierte Wirbelströme zu vermeiden. In bekannter Weise (DE 199 15 412 A1) wurde bereits versucht, durch einen Polschuh in Form einer flachen, zum Werkzeugschaft hin sich verjüngenden Scheibe aus magnetisierbarem Material den Magnetfluss im Bereich des werkzeugseitigen Endes des Hülsenabschnitts zu konzentrieren. Bei dieser bekannten Polschuhscheibe verläuft die dem Spuleninneren zugewandte Scheibenfläche achsnormal zur Drehachse des Werkzeughalters. Es hat sich gezeigt, dass die Abschirmwirkung einerseits und die Magnetflusskonzentrierungswirkung andererseits verbessert werden kann, wenn die dem Spuleninneren zugewandte Fläche des aus magnetisierbarem Material bestehenden Ringelements schräg bzw. konusförmig vom axialen Ende des Hülsenabschnitts weg nach radial außen verläuft. Ein solcher Materialverlauf nähert sich dem Flusslinienverlauf an, den die Induktionsspule im Luftmedium hätte und erleichtert die Konzentration des Magnetflusses in dem magnetisierbaren Material des Ringelements. Mit der verbesserten Konzentrationswirkung einher geht eine Verbesserung der Abschirmwirkung. Abschirmende Ringelemente der vorstehend erläuterten Art sind, insbesondere dann von Vorteil, wenn das Ringelement in seinen radialen äußeren Bereichen an einen in Luft verlaufenden Teil des magnetischen Kreises der Induktionsspule anschließt, also den Flusslinienverlauf eines solchen Magnetfeldkreises aufnimmt, und zwar selbst dann, wenn der magnetische Fluss der Induktionsspule im weiteren Verlauf in einer die Induktionsspule an ihrem Außenumfang und an zumindest eine ihrer beiden axialen Stirnseiten überdeckenden ein- oder mehrteiligen Jochschale aus magnetisierbarem Material verläuft.

Unter einem zweiten Aspekt der Erfindung ist vorgesehen, dass das Ringelement als über eine axiale Höhe von wenigstens dem 1,5fachen des Durchmessers des Schafts des Werkzeugs über das werkzeugseitige Ende des Hülsenabschnitts axial aufragender Abschirmkragen ausgebildet ist, dessen größter Durchmesser kleiner ist als der größte Wicklungsdurchmesser der Induktionsspule. Ein solches als Abschirmkragen ausgebildetes Ringelement schirmt nicht nur den Werkzeugschaft im Bereich des werkzeugseitigen Endes des Hülsenabschnitts magnetisch ab, sondern vermag auf Grund seiner bezogen auf den Werkzeugschaftdurchmesser beträchtlichen Höhe auch schräg zur Drehachse verlaufenden Magnetfluss zu konzentrieren. Es versteht sich, dass beide Aspekte der Erfindung an ein und demselben Ringelement verwirklicht sein können.

Soweit im Vorstehenden von magnetisierbarem Material die Rede ist, soll darunter Material mit hoher magnetischer Leitfähigkeit, wie zum Beispiel ferromagnetisches Material, wie zum Beispiel Weicheisenlaminat oder ferrimagnetisches Material, zum Beispiel Ferrit oder dergleichen, verstanden werden. Bei dem die Induktionsspule speisenden Generator kann es sich um einen Wechselstromgenerator, aber auch um einen Generator handeln, welcher gepulsten Gleichstrom abgibt. Bevorzugt sind Generatoren für höherfrequente oder hochfrequente Ströme.

In einer bevorzugten Ausgestaltung hat das Ringelement nicht nur auf seiner dem Inneren der Induktionsspule zugewandten Seite eine vom Werkzeughalter axial weg konisch sich erweiternde äußere Mantelfläche, sondern weist auch auf seiner dem Werkzeughalter axial abgewandten Seite eine derartige konisch sich erweiternde innere Mantelfläche auf. Die innere konische Mantelfläche erleichtert nicht nur das Einsetzen oder Entnehmen des Werkzeugs, sondern sorgt für eine Konzentration des Magnetflusses im Abstand vom Werkzeugschaft. Die innere und die äußere Mantelfläche haben zweckmäßigerweise etwa gleichen Konuswinkel.

Das Ringelement kann im Bereich seines Außenumfangs eine im Wesentlichen zylindrische Umfangsfläche haben, die insbesondere von einem Ringfortsatz gebildet sein kann, der von dem Ringelement im Bereich von dessen Außenumfang axial vom Werkzeughalter weg absteht. Eine solche Umfangsfläche verbessert das Flusskonzentrationsverhalten des Ringelements, insbesondere wenn sein größter Durchmesser kleiner ist als der kleinste Wicklungsdurchmesser der Induktionsspule und das Ringelement hierbei Magnetfluss konzentriert, der das Ringelement in einem Luftanteil des magnetischen Kreises erreicht.

Die dem Inneren der Induktionsspule axial zugewandte, schräg verlaufende Fläche des Ringelements verläuft zweckmäßigerweise unter einem Winkel zwischen 10° und 80°, vorzugsweise zwischen 20° und 70° zur Achse des Schafts des Werkzeugs geneigt. Die axiale Höhe des Ringelements beträgt bevorzugt wenigstens das Zweifache des Schaftdurchmessers des Werkzeugs.

Das Ringelement kann sich bis nahe an den Wicklungsaußendurchmesser der Induktionsspule heranerstrecken, hat aber zweckmäßigerweise einen maximalen Durchmesser, der kleiner ist als der kleinste Wicklungsdurchmesser der Induktionsspule. Die Induktionsspule kann im Übrigen im Bereich ihres Außenumfangs oder/und an einer oder beiden ihrer Stirnseiten mit einem Mantel aus einem den magnetischen Fluss konzentrierenden, magnetisierbaren Material versehen sein, der außerhalb des Ringelements für eine Konzentration des Magnetflusses sorgt und auch den Magnetfluss zu dem Ringelement hin lenken kann.

Der Innendurchmesser der Induktionsspule ist um einiges größer als der Außendurchmesser des Hülsenabschnitts des Werkzeughalters gewählt, um ein und dieselbe Induktionsspule bei Werkzeughalter mit unterschiedlichen Hülsenabschnittdurchmessern nutzen zu können. Um das Ringelement in einem solchen Fall unterschiedlichen Schaftdurchmessern des Werkzeugs besser anpassen zu können, ist das Ringelement bevorzugt über eine Scheibe aus nicht magnetisierbarem Material, insbesondere aus Kunststoff oder Keramik, an einer die Induktionsspule umfassenden Baueinheit gehalten und zwar zweckmäßigerweise betriebsmäßig auswechselbar.

Im Folgenden sollen Ausführungsbeispiele der Erfindung anhand einer Zeichnung näher erläutert werden. Hierbei zeigt:
- Figur 1: einen Axiallängsschnitt durch eine Induktionsspule zur induktiven Erwärmung eines Werkzeughalters und
- Figuren 2-5: Axiallängsschnitte durch Varianten der Induktionsspule.

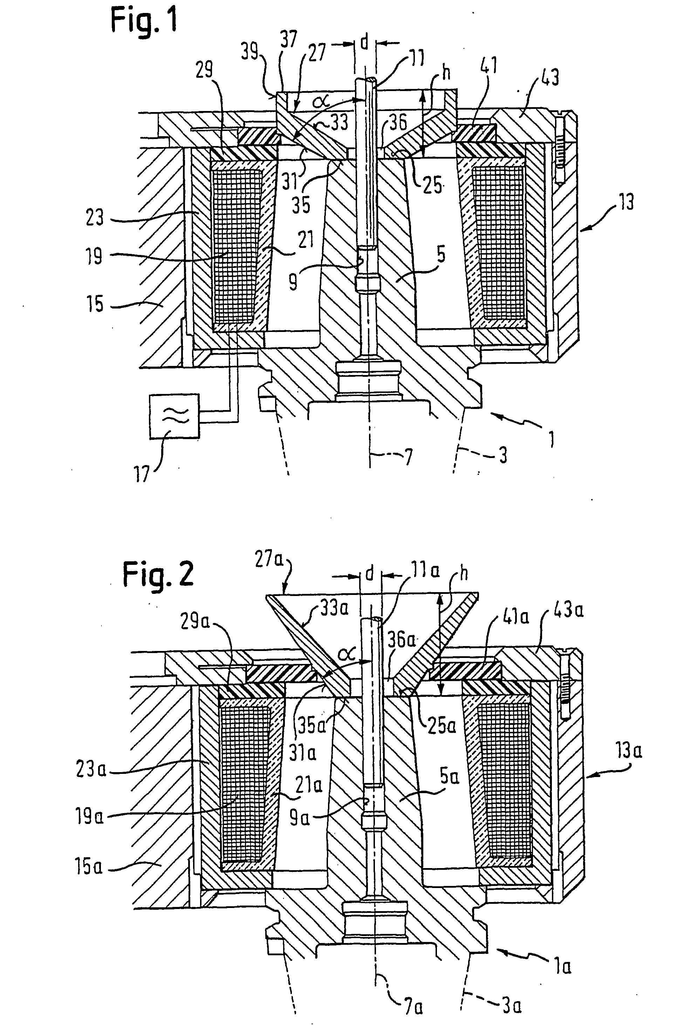

Figur 1 zeigt einen hier einteiligen, gegebenenfalls aber auch mehrteiligen Werkzeughalter 1 aus einem zumindest elektrisch leitenden, hier aber auch magnetisierbarem Material, wie zum Beispiel Stahl, der an seinem axial einen Ende ein Norm-Anschlussstück, wie zum Beispiel einen Steilkegel 3, und an seinem axial anderen Ende einen Hülsenabschnitt 5 aufweist. Der Hülsenabschnitt 5 enthält zentrisch zur Drehachse 7 des Werkzeughalters eine Aufnahmeöffnung 9 für ein mit seinem Schaft 11 in die Aufnahmeöffnung 9 in nachfolgend noch näher erläuterter Weise einsetzbares, ansonsten nicht näher dargestelltes Rotationswerkzeug, beispielsweise einem Bohrer, einen Fräser oder ein Reibwerkzeug. Der Außendurchmesser des Schafts 11 ist etwas größer als der freie Nenndurchmesser der Aufnahmeöffnung 9, so dass der Schaft 11 eingesetzt in den Hülsenabschnitt 5 für die Übertragung des Arbeitsdrehmoments im Presssitz gehalten ist.

Um den Werkzeugschaft 11 in dem Werkzeughalter 1 einsetzen oder aus diesem entnehmen zu können, wird der Hülsenansatz 5 durch Erwärmen aufgeweitet. Die Erwärmung erfolgt mittels einer auf den Hülsenansatz 5 aufgesetzten und diesen mit radialem Abstand ihres Innendurchmessers vom Außenumfang des Hülsenabschnitts 5 konzentrisch umschließenden Induktionsspule 13, die mittels eines bei 15 angedeuteten Halter eines Induktionsschrumpfgeräts achsparallel zur Drehachse 7 verschiebbar gehalten und aus einem Stromgenerator 17 mit Wechselstrom oder gepulstem Gleichstrom einer Frequenz von beispielsweise 10 bis 50 kHz gespeist wird. Der von einer angenähert zylindrischen Wicklung 19 erzeugte Magnetfluss induziert in dem Hülsenabschnitt 5 Wirbelströme, die den Hülsenabschnitt 5 in relativ kurzer Zeit erwärmen und damit die Aufnahmeöffnung 9 zum Einschieben oder Herausziehen des Werkzeugschafts 11 hinreichend aufweiten.

Die Induktionsspule 13 hat innenliegend einen aus temperaturfestem Kunststoff oder Keramik bestehenden Spulenkörper 21, auf den die viellagige Wicklung 19 aufgebracht ist. Der Außenumfang und die dem Werkzeug axial abgewandte Stirnfläche der Wicklung 19 ist mit einer einteiligen, gegebenenfalls aber auch mehrteiligen Jochschale 23 aus einem magnetisierbaren, elektrisch nicht leitenden Material überdeckt, welches den magnetischen Fluss in diesem Umgebungsbereich der Wicklung 19 auf die Jochschale 23 konzentriert. Die Jochschale 23 kann aus ferromagnetischem Material oder magnetischen Verbundwerkstoffen auf Keramik oder Kunststoffbasis, wie zum Beispiel Ferrit, hergestellt sein.

Die mit der Jochschale 23 versehene Wicklung 19 erstreckt sich im Wesentlichen über die gesamte für die Aufnahme des Werkzeugschafts 11 bestimmte Länge der Aufnahmeöffnung 9 bzw. des Hülsenabschnitts 5. Mit ihrer der werkzeugseitigen Stirnfläche 25 des Hülsenabschnitts 5 benachbarten Stirnseite erstreckt sich die Wicklung 19 axial bis etwa auf die Höhe der Stirnseite 25 des Hülsenabschnitts 5.

Um den magnetischen Fluss von der auf dieser Seite etwas über die Wicklung 19 axial überstehenden Jochschale 23 optimal zur Stirnseite 25 des Hülsenabschnitts 5 zu lenken und gleichzeitig den über den Hülsenabschnitt 5 vorstehenden Teil des Werkzeugschafts 11 abzuschirmen und vor induktiver Erwärmung zu schützen, ist auf die Stirnfläche 25 ein angenähert konusschalenförmiger Abschirmkragen 27 aufgesetzt. Der Abschirmkragen 27 verläuft allseitig im Abstand von der Jochschale 23, die sich im dargestellten Ausführungsbeispiel nicht über die werkzeugseitige Stirnfläche der Wicklung 19 hinweg erstreckt, sondern lediglich etwas über diese Stirnfläche vorsteht. Die werkzeugseitige Stirnfläche der Wicklung 19 ist im dargestellten Ausführungsbeispiel mit einer aus nicht magnetischem Material, zum Beispiel temperaturfestem Kunststoff, bestehende Abstandhalterscheibe 29 abgedeckt. In einer Variante kann diese mit ihrem Innenumfang wiederum im Abstand zum Abschirmkragen 27 endende Scheibe 29 gleichfalls aus dem magnetischen Material der Jochschale 23 bestehen, also Bestandteil der Jochschale 23 sein.

Der Abschirmkragen 27 hat im Bereich zwischen dem Außenumfang des Hülsenabschnitts 5 und dem Innenumfang der Wicklung 19 auf der axial zur Wicklung 19 weisenden Seite eine konusförmige bzw. kegelstumpfförmige äußere Mantelfläche 31 mit einem Neigungswinkel α von etwa 60° bezogen auf die Drehachse 7. Die der Wicklung 19 axial abgewandte, gleichfalls konusförmige innere Mantelfläche 33 hat eine zur äußeren Mantelfläche 31 etwa parallele Erzeugende. Der Abschirmkragen 27 hat dem Hülsenabschnitt 5 axial zugewandt eine achsnormal verlaufende, ebene Auflagefläche 35, mit der er an der Stirnfläche 25 des Hülsenabschnitts 5 flächig aufliegt. Am Außenumfang des Konusbereichs des Abschirmkragens 27 ist dieser mit einem vom Hülsenabschnitt 5 axial weg gerichtet abstehenden Ringansatz 37 mit einer ringzylindrischen äußeren Mantelfläche 39 versehen. Der Außendurchmesser des Ringansatzes 37 und damit des Abschirmkragens 27 ist kleiner als der Innendurchmesser der Wicklung 19. Die axiale Gesamthöhe h des Abschirmkragens 27, mit der er sich über die Stirnfläche 25 axial erhebt, ist mehr als doppelt so groß, wie der Schaftdurchmesser d des Werkzeugschafts 11 unmittelbar außerhalb des Hülsenabschnitts 5. Im vorliegenden Fall ist die Höhe h etwas mehr als dreimal so groß wie der Durchmesser d.

Wenngleich der zwischen der Jochschale 23 und dem Abschirmkragen 27 verbleibende Ringspalt den magnetischen Widerstand im magnetischen Flusskreis der Induktionsspule 13 erhöht, so erlaubt dieser in Luft verlaufende Anteil des magnetischen Kreises in Verbindung mit dem konusförmigen Abschirmkragen 27 eine im Bereich des Werkzeugschafts 11 in hohem Maße streufeldfreie Konzentration des magnetischen Flusses auf den Hülsenabschnitt 5. Auf diese Weise lässt sich der Hülsenabschnitt 5 induktiv erwärmen und damit aufweiten, ohne dass es zu einer übermäßigen Erwärmung des Werkzeugschafts 11 kommt, was das Ausspannen des Werkzeugschafts 11 aus dem Werkzeughalter 1 erleichtert. Im Übrigen verläuft der im Hülsenabschnitt 5 axial benachbarte Bereich des Abschirmkragens 27 unter Bildung eines Ringspalts 36 im radialen Abstand zum Werkzeugschaft 11.

Der Abschirmkragen 27 ist an einer Ringscheibe 41 aus einem temperaturbeständigen Kunststoff oder aus Keramik befestigt und mit dem Halter 15 oder einem an dem Halter 15 befestigten Gehäuse 43 der Induktionsspule 13 auswechselbar zu einer Baueinheit verbunden. Für die auswechselbare Verbindung kann die Ringscheibe 41 und das Gehäuse 43 beispielsweise nach Art eines Bajonettverschlusses aneinander verriegelt sein. Der Abschirmkragen 27 sorgt auf diese Weise nicht nur für die axiale Positionierung der Induktionsspule 13 relativ zum Hülsenabschnitt 5, sondern kann auch zur Anpassung ein und derselben Induktionsspule 13 am Werkzeughalter 1 mit unterschiedlichem Durchmesser der Aufnahmeöffnung 9 oder des Hülsenansatzes 5 ausgetauscht werden.

Im Folgenden werden Varianten der anhand von Figur 1 beschriebenen Vorrichtung erläutert. Gleichwirkende Komponenten sind mit den Bezugszahlen aus Figur 1 bezeichnet und zur Unterscheidung mit einem Buchstaben versehen. Zur Erläuterung des Aufbaus und der Wirkungsweise wird auf die vorangegangene Beschreibung und insbesondere die Beschreibung zu Figur 1 Bezug genommen. Die nachfolgend erläuterten Ausführungsformen unterscheiden sich im Wesentlichen nur durch die Gestaltung des Abschirmkragens der Induktionsspule. Der Generator 17 ist, wenngleich nicht dargestellt, vorhanden.

Der Abschirmkragen 27a in Figur 2 unterscheidet sich von dem Abschirmkragen 27 aus Figur 1 im Wesentlichen dadurch, dass der Winkel α geringer gewählt ist, hier in der Größenordnung von etwa 45°, während die axiale Höhe h etwa das Fünffache des Durchmessers d des Werkzeugschafts 11a beträgt. Der größte Außendurchmesser des Abschirmkragens 27a ist wiederum etwas kleiner gewählt als der minimale Innendurchmesser der Wicklung 19a. Da die Erzeugende des inneren Konusmantels 33a unter einem etwas größeren Winkel zur Drehachse 7a geneigt ist als die Erzeugende des äußeren Konusmantels 31 a, verjüngt sich der Abschirmkragen 27a nach außen. Die Konusflächen 31 a und 33a erstrecken sich bis an das radial äußere Ende des Abschirmkragens 27a und dementsprechend hat dieser Abschirmkragen keinen Ringansatz ähnlich dem Ansatz 37 aus Figur 1.

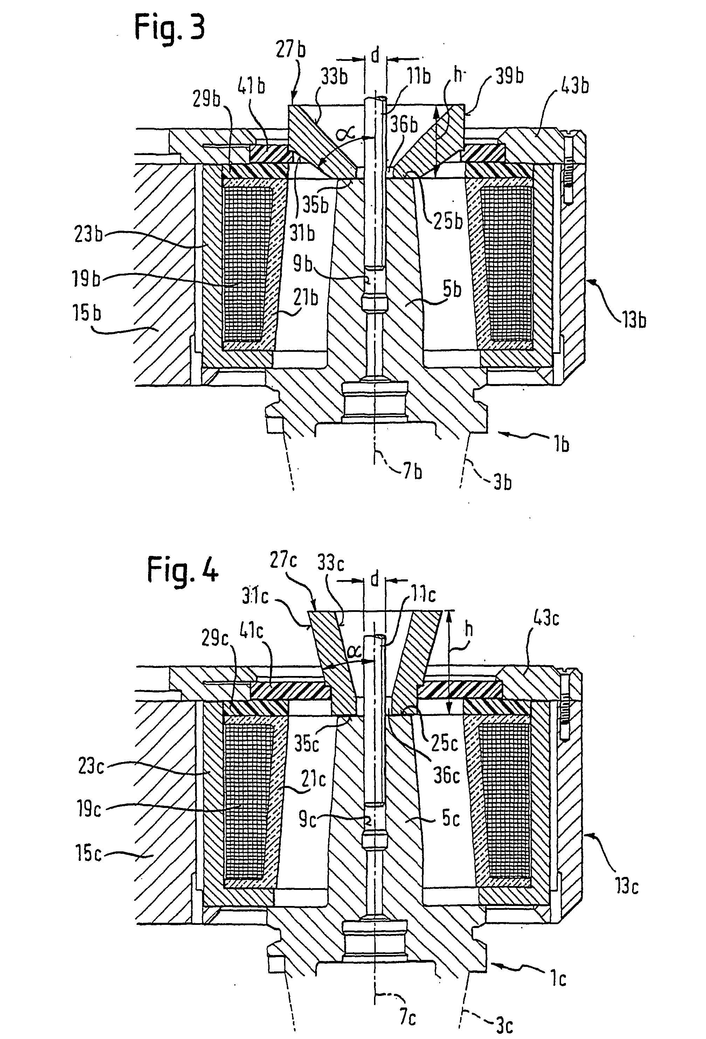

Der in Figur 3 dargestellte Abschirmkragen 27b unterscheidet sich von dem Abschirmkragen 27 aus Figur 1 im Wesentlichen nur dadurch, dass die Erzeugende der inneren Mantelfläche 33b unter einem kleineren Winkel zur Drehachse 7b geneigt ist, als die Erzeugende der äußeren Mantelfläche 31 b und sich darüber hinaus bis zum axial der Anlagefläche 35b abgewandten Stirnrand geradlinig erstreckt. Der Abschirmkragen 27b hat damit zwar eine kreiszylindrische Umfangsfläche 39b, bildet jedoch keinen Ringansatz ähnlich dem Ringansatz 37 in Figur 1. Die Bemessung des Winkels α sowie der axialen Höhe h bezogen auf den Werkzeugschaftdurchmesser d entspricht der Variante in Figur 1.

Die Ausführungsform des Abschirmkragens 27c in Figur 4 unterscheidet sich von dem Abschirmkragen 27a der Figur 2 in erster Linie dadurch, dass der Neigungswinkel α der Erzeugenden des äußeren Konusmantels 31c kleiner ist als in der Variante der Figur 2 und in der Größenordnung von etwa 15° liegt. Die Erzeugende des inneren Konusmantels 33c verläuft etwa parallel zur Erzeugenden des äußeren Konusmantels 31 c. Die axiale Höhe des Abschirmkragens 27 beträgt wiederum etwa das Fünffache des Durchmessers d des Werkzeugschafts 11c.

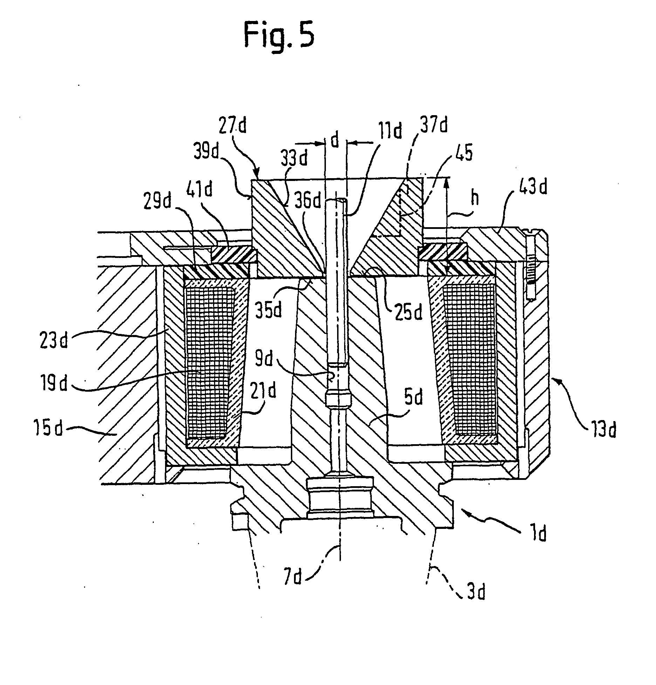

Die Variante des Abschirmkragens 27d in Figur 5 unterscheidet sich von den vorangegangen erläuterten Varianten dadurch, dass die achsnormale Auflagefläche 35d, mit welcher der Abschirmkragen 27d auf der Stirnfläche 25d des Hülsenabschnitts 5d aufliegt, im Wesentlichen bis an den zylindrischen Außenumfang 39d heranreicht, also eine äußere Konusfläche, wie sie in Figur 1 bei 31 dargestellt ist, nicht vorhanden ist. Die axiale Höhe h des Abschirmkragens 27d beträgt aber auch hier ein Mehrfaches, im dargestellten Ausführungsbeispiel das Fünffache des Durchmessers d des Werkzeugschafts 11 d. Der Innenumfang des auf diese Weise gebildeten Rings ist mit einer vom Hülsenabschnitt 5d axial weg gerichtet nach radial außen sich erweiternden inneren Konusfläche 33d versehen, die das Ergreifen des Werkzeugschafts 11d erleichtert. Wie durch eine strichpunktierte Linie 45 angedeutet, kann die Innenkonusfläche 33d mit einer Ringkehle versehen sein, die an dem Abschirmkragen 27d einen Ringansatz 37d erzeugt.

## Patentansprüche

1. Vorrichtung zum induktiven Erwärmen eines eine zentrische Aufnahmeöffnung (9) für einen Schaft (11) eines Rotationswerkzeugs enthaltenden Hülsenabschnitts (5) eines Werkzeughalters (1), der den in der Aufnahmeöffnung (9) sitzenden Schaft (11) des Werkzeugs im Presssitz hält und bei Erwärmung freigibt, umfassend
- eine den Hülsenabschnitt (5) des Werkzeughalters (1) für die Erwärmung mit radialem Abstand ringförmig umschließende Induktionsspule (13),
- eine die Induktionsspule (13) mit elektrischem Strom periodisch wechselnder Amplitude speisenden Generator (17) und
- ein den Schaft (11) des Werkzeugs nahe dem werkzeugseitigen Ende des Hülsenabschnitts (5) des Werkzeughalters (1) umschließendes Ringelement (27) aus einem den magnetischen Fluss konzentrierenden, magnetisierbaren Material, wobei das Ringelement (27) im Bereich seines kleinsten Durchmessers dem werkzeugseitigen Ende des Hülsenabschnitts (5) eng benachbart ist, insbesondere auf dem Hülsenabschnitt (5) aufliegt,
**dadurch gekennzeichnet, dass**
die dem Inneren der Induktionsspule (13) axial zugewandte Fläche (31) des Ringelements (27) zumindest in einem Teilbereich radial zwischen dem Außenumfang des werkzeugseitigen Endes des Hülsenabschnitts (5) und dem Innenumfang der Induktionsspule (13) axial vom Ende des Hülsenabschnitts (5) weg schräg nach radial außen verläuft.

2. Vorrichtung nach Anspruch 1 oder dem Oberbegriff von Anspruch 1, **dadurch gekennzeichnet, dass** das Ringelement (27) als über eine axiale Höhe (h) von wenigstens dem 1,5fachen des Durchmessers (d) des Schafts (11) des Werkzeugs über das werkzeugseitige Ende des Hülsenabschnitts (5) axial aufragender Abschirmkragen ausgebildet ist, dessen größter Durchmesser kleiner ist als der größte Wicklungsdurchmesser der Induktionsspule (13).

3. Vorrichtung nach Anspruch 2, **dadurch gekennzeichnet, dass** das Ringelement (27) über eine axiale Höhe (h) von wenigstens dem Zweifachen des Schaftdurchmessers (d) über das werkzeugseitige Ende des Hülsenabschnitts (5) axial aufragt.

4. Vorrichtung nach einem der Ansprüche 1 bis 3, **dadurch gekennzeichnet, dass** das Ringelement (27) im Bereich radial zwischen dem Hülsenabschnitt (5) und der Induktionsspule (13) auf seiner dem Werkzeughalter (1) axial zugewandten Seite eine vom Werkzeughalter (1) axial weg konisch sich erweiternde äußere Mantelfläche (31) aufweist.

5. Vorrichtung nach Anspruch 4, **dadurch gekennzeichnet, dass** das Ringelement (27) auf seiner dem Werkzeughalter (1) axial abgewandten Seite eine vom Werkzeughalter (1) axial weg konisch sich erweiternde innere Mantelfläche (33) aufweist.

6. Vorrichtung nach Anspruch 5, **dadurch gekennzeichnet, dass** die äußere (31) und die innere (33) Mantelfläche etwa gleichen Konuswinkel haben.

7. Vorrichtung nach einem der Ansprüche 1 bis 6, **dadurch gekennzeichnet, dass** das Ringelement (27) im Bereich seines Außenumfangs eine im Wesentlichen zylindrische Umfangsfläche (39) hat.

8. Vorrichtung nach einem der Ansprüche 1 bis 7, **dadurch gekennzeichnet, dass** das Ringelement (27) im Bereich seines Außenumfangs einen vom Werkzeughalter (1) axial weg abstehenden Ringfortsatz (37) aufweist.

9. Vorrichtung nach einem der Ansprüche 1 bis 8, **dadurch gekennzeichnet, dass** die dem Inneren der Induktionsspule (13) axial zugewandte, schräg verlaufende Fläche (31) des Ringelements (27) unter einem Winkel zwischen 10° und 80°, insbesondere zwischen 20° und 70°, zur Achse (7) des Schafts (11) des Werkzeugs geneigt verläuft.

10. Vorrichtung nach einem der Ansprüche 1 bis 9, **dadurch gekennzeichnet, dass** das Ringelement (27) dem Hülsenabschnitt (5) des Werkzeughalters (1) benachbart eine zur Drehachse (7) des Werkzeugschafts (11) achsnormal verlaufend ebene Stirnfläche (35) zur flächigen Auflage auf einer ebenen Stirnfläche (25) des Hülsenabschnitts (5) aufweist.

11. Vorrichtung nach einem der Ansprüche 1 bis 10, **dadurch gekennzeichnet, dass** der größte Durchmesser des Ringelements (27) kleiner ist als der kleinste Wicklungsdurchmesser der Induktionsspule (13).

12. Vorrichtung nach Anspruch 11, **dadurch gekennzeichnet, dass** die Induktionsspule (13) im Bereich ihres Außenumfangs oder/und an einer oder an beiden ihrer Stirnseiten einen Mantel aus einem den magnetischen Fluss konzentrierenden magnetisierbaren Material aufweist.

13. Vorrichtung nach Anspruch 12, **dadurch gekennzeichnet, dass** das Ringelement (27) allseitig im Abstand zu dem Mantel verläuft.

14. Vorrichtung nach einem der Ansprüche 1 bis 13, **dadurch gekennzeichnet, dass** das Ringelement (27) über eine Scheibe (41) aus nicht magnetisierbarem Material, insbesondere Kunststoff oder Keramik, an einer die Induktionsspule (13) umfassenden Baueinheit gehalten ist.

15. Vorrichtung nach Anspruch 14, **dadurch gekennzeichnet, dass** das Ringelement (27) fest an der Scheibe (41) angebracht und die Scheibe (41) betriebsmäßig auswechselbar an der Baueinheit gehalten ist.

16. Vorrichtung nach einem der Ansprüche 1 bis 15, **dadurch gekennzeichnet, dass** die Induktionsspule (12) eine Wicklung (19) hat, deren zur werkzeugseitigen Stirnfläche (25) des Hülsenabschnitts (5) benachbarte Stirnseite sich axial bis etwa auf die Höhe der Stirnfläche (25) des Hülsenabschnitts (5) erstreckt.

17. Vorrichtung nach einem der Ansprüche 1 bis 16, **dadurch gekennzeichnet, dass** die Induktionsspule (13) eine Wicklung (19) hat, deren Außenumfang und deren dem Werkzeug axial abgewandte Stirnfläche mit einer ein- oder mehrteiligen Jochschale (23) aus magnetischem, elektrisch nicht leitendem Material überdeckt ist, wobei die Jochschale (23) über die werkzeugseitige Stirnfläche der Wicklung (19) vorsteht.

## Claims

1. Device for the inductive heating of a sleeve section (5) of a toolholder (1) which contains a central holding opening (9) for a shaft (11) of a rotating tool, which toolholder holds the shaft (11) of the tool sitting in the holding opening (9) in a press fit and releases it when heated, comprising
- an induction coil (13), which encloses the sleeve section (5) of the toolholder (1) annularly with a radial spacing for the heating,
- a generator (17) that feeds the induction coil (13) with electric current of periodically changing amplitude, and
- a ring element (27), enclosing the shaft (11) of the tool close to the tool-side end of the sleeve section (5) of the toolholder (1) and made of a magnetisable material that concentrates the magnetic flux, the ring element (27), in the region of its smallest diameter, being closely adjacent to the tool-side end of the sleeve section (5), in particular bearing on the sleeve section (5), **characterised in that**
the surface (31) of the ring element (27) which faces the interior of the induction coil (13) axially, at least in a subregion, extends radially between the outer circumference of the tool-side end of the sleeve section (5) and the inner circumference of the induction coil (13) and axially obliquely radially outward away from the end of the sleeve section (5).

2. Device according to claim 1 or the preamble of claim 1, **characterised in that** the ring element (27) is formed as a shielding collar which projects axially beyond the tool-side end of the sleeve section (5) over an axial height (h) of at least 1.5 times the diameter (d) of the shaft (11) of the tool, the greatest diameter of which collar is smaller than the greatest winding diameter of the induction coil (13).

3. Device according to claim 2, **characterised in that** the ring element (27) projects axially beyond the tool-side end of the sleeve section (5) over an axial height (h) of at least twice the shaft diameter (d).

4. Device according to one of claims 1 to 3, **characterised in that**, in the region radially between the sleeve section (5) and the induction coil (13), on its side facing axially toward the toolholder (1), the ring element (27) has an outer casing surface (31), which widens conically axially away from the toolholder (1).

5. Device according to claim 4, **characterised in that** on its side facing axially away from the toolholder (1), the ring element (27) has an inner casing surface (33) which widens conically axially away from the toolholder (1).

6. Device according to claim 5, **characterised in that** the outer (31) and the inner (33) casing surfaces have approximately the same cone angle.

7. Device according to one of claims 1 to 6, **characterised in that** in the region of its outer circumference the ring element (27) has a substantially cylindrical circumferential surface (39).

8. Device according to one of claims 1 to 7, **characterised in that** in the region of its outer circumference, the ring element (27) has an annular extension (37) that projects axially away from the toolholder (1).

9. Device according to one of claims 1 to 8, **characterised in that** the surface (31) of the ring element (27) which faces the interior of the induction coil (13) axially and runs obliquely, is inclined at an angle of between 10° and 80°, in particular between 20° and 70°, with respect to the axis (7) of the shaft (11) of the tool.

10. Device according to one of claims 1 to 9, **characterised in that** the ring element (27) adjacent to the sleeve surface (5) of the toolholder (1) has a flat end surface (35) running axially normally to the axis of rotation (7) of the tool shaft (11), in order to rest flat on a flat end surface (25) of the sleeve section (5).

11. Device according to one of claims 1 to 10, **characterised in that** the greatest diameter of the ring element (27) is smaller than the smallest winding diameter of the induction coil (13).

12. Device according to claim 11, **characterised in that** in the region of its outer circumference and/or at one or both of its ends, the induction coil (13) has a casing of a magnetisable material that concentrates the magnetic flux.

13. Device according to claim 12, **characterised in that** the ring element (27) runs on all sides at a distance from the casing.

14. Device according to one of claims 1 to 13, **characterised in that** the ring element (27) is held on a structural unit, which encloses the induction coil (13), by means of a disc (41) made of non-magnetisable material, in particular plastic or ceramic.

15. Device according to claim 14, **characterised in that** the ring element (27) is fitted firmly to the disc (41), and the disc (41) is held replaceably on the structural unit during operation.

16. Device according to one of claims 1 to 15, **characterised in that** the induction coil (12) has a winding (19), the end face of which adjacent to the tool-side end face (25) of the sleeve section (5) extends axially up to the height of the end face (25) of the sleeve section (5).

17. Device according to one of claims 1 to 16, **characterised in that** the induction coil (13) has a winding (19) the outer circumference of which and end face of which facing axially away from the tool is covered by a one-part or multi-part yoke shell (23) made of magnetic, non-electricity conducting material, whereby the yoke shell (23) projects over the tool-side end face of the winding (19).

## Revendications

1. Dispositif pour chauffer par induction une portion de manchon (5) d'un porte-outil (1), présentant une ouverture de réception (9) centrée, pour la tige (11) d'un outil rotatif, qui maintient en ajustement pressé la tige (11) de l'outil, se trouvant dans le trou de réception (9), et la libère pendant l'échauffement, comprenant
- une bobine d'induction (13) enfermant en anneau, à distance radiale, la portion de manchon (5) du porte-outil (1) pour le chauffage,
- un générateur (17) alimentant la bobine d'induction (13) en courant électrique dont l'amplitude varie périodiquement, et
- un élément annulaire (27) enfermant la tige (11) de l'outil, à proximité de l'extrémité côté outil de la portion de manchon (5) du porte-outil (1), en un matériau magnétisable, concentrant le flux magnétique, l'élément annulaire (27) étant étroitement voisin, dans la zone de son plus petit diamètre, de l'extrémité côté outil de la portion de manchon (5), et reposant en particulier sur la portion de manchon (5),
**caractérisé en ce que**
au moins dans une zone partielle, radialement entre le pourtour extérieur de l'extrémité côté outil de la portion de manchon (5) et le pourtour intérieur de la bobine d'induction (13), la surface (31), tournée axialement vers l'intérieur de la bobine d'induction (13), de l'élément annulaire (27), s'étend axialement depuis l'extrémité de la portion de manchon (5), obliquement et radialement vers l'extérieur.

2. Dispositif selon la revendication 1 ou le préambule de la revendication 1, **caractérisé en ce que** l'élément annulaire (27) est conformé en une collerette de blindage, dépassant axialement de l'extrémité côté outil de la portion de manchon (5), sur une hauteur axiale h d'au moins 1,5 fois le diamètre d de la tige (11) de l'outil, collerette dont le plus grand diamètre est inférieur au plus grand diamètre d'enroulement de la bobine d'induction 13.

3. Dispositif selon la revendication 2, **caractérisé en ce que** l'élément annulaire (27) dépasse axialement de l'extrémité côté outil de la portion de manchon (5), sur une hauteur axiale h au moins deux fois supérieure au diamètre d de la tige.

4. Dispositif selon l'une des revendications 1 à 3, **caractérisé en ce que** l'élément annulaire (27) présente, dans la zone radialement entre la portion de manchon (5) et la bobine d'induction (13), sur son côté tourné axialement vers le porte-outil (11), une surface d'enveloppe (31) extérieure s'élargissant coniquement et axialement depuis le porte-outil (1).

5. Dispositif selon la revendication 4, **caractérisé en ce que** l'élément annulaire (27) présente, sur son côté tourné axialement à l'opposé du porte-outil (1), une surface d'enveloppe intérieure (33) s'élargissant coniquement axialement depuis le porte-outil (1).

6. Dispositif selon la revendication 5, **caractérisé en ce que** la surface d'enveloppe extérieure (31) et la surface d'enveloppe intérieure (33) présentent des angles de cône à peu près égaux.

7. Dispositif selon l'une des revendications 1 à 6, **caractérisé en ce que** l'élément annulaire (27) présente une surface périphérique (39) sensiblement cylindrique dans la zone de son pourtour extérieur.

8. Dispositif selon l'une des revendications 1 à 7, **caractérisé en ce que** l'élément annulaire (27) présente, dans la zone de son pourtour extérieur, un prolongement annulaire (37) dépassant axialement du porte-outil (1).

9. Dispositif selon l'une des revendications 1 à 8, **caractérisé en ce que** la surface (31) s'étendant obliquement, tournée axialement vers l'intérieur de la bobine d'induction (13), de l'élément annulaire (27), s'étend inclinée suivant un angle compris entre 10° et 80°, en particulier entre 20 et 70°, par rapport à l'axe (7) de la tige (11) de l'outil.

10. Dispositif selon l'une des revendications 1 à 9, **caractérisé en ce que** l'élément annulaire (27) présente, à proximité de la portion de manchon (5) du porte-outil (1), une surface frontale (35) plane s'étendant perpendiculairement à l'axe de rotation (7) de la tige d'outil (11), pour le support à plat sur une surface frontale (25) plane de la portion de manchon (5).

11. Dispositif selon l'une des revendications 1 à 10, **caractérisé en ce que** le plus grand diamètre de l'élément annulaire (27) est inférieur au plus petit diamètre d'enroulement de la bobine d'induction (13).

12. Dispositif selon la revendication 11, **caractérisé en ce que** la bobine d'induction (13) présente, dans la zone de son pourtour extérieur ou/et sur l'un ou les deux côtés frontaux, une enveloppe en un matériau magnétisable concentrant le flux magnétique.

13. Dispositif selon la revendication 12, **caractérisé en ce que** l'élément annulaire (27) s'étend de tous côtés à distance de l'enveloppe.

14. Dispositif selon l'une des revendications 1 à 13, **caractérisé en ce que** l'élément annulaire (27) est maintenu, par un disque (41) en matériau non magnétisable, en particulier en matière plastique ou en céramique, sur une unité de construction comprenant la bobine d'induction (13).

15. Dispositif selon la revendication 14, **caractérisé en ce que** l'élément annulaire (27) est placé de manière fixe sur le disque (41) et le disque (41) est maintenu, de manière fonctionnelle, de façon échangeable sur l'unité de construction.

16. Dispositif selon l'une des revendications 1 à 15, **caractérisé en ce que** la bobine d'induction (12) possède un enroulement (19) dont le côté frontal, voisin de la surface frontale (25) côté outil de la portion de manchon (5), s'étend axialement jusqu'à approximativement la hauteur de la surface frontale (25) de la portion de manchon (5).

17. Dispositif selon l'une des revendications 1 à 16, **caractérisé en ce que** la bobine d'induction (12) possède un enroulement (19) dont le pourtour extérieur et la surface frontale tournée axialement à l'opposé de l'outil, sont recouverts par une coquille de culasse (23) en une ou plusieurs parties en un matériau magnétique, électriquement non conducteur, la coquille de culasse (23) dépassant de la surface frontale côté outil de l'enroulement (19).
